(19) Europäisches Patentamt
European Patent Office
Office européen des brevets

(11) Veröffentlichungsnummer: **0 001 857**
**A1**

(12) # EUROPÄISCHE PATENTANMELDUNG

(21) Anmeldenummer: **78200264.6**

(22) Anmeldetag: **27.10.78**

(51) Int. Cl.$^2$: **C 10 J 3/06**
C 10 J 3/20, C 10 J 3/66
C 01 B 2/00

(30) Priorität: **31.10.77 CH 13206/77**

(43) Veröffentlichungstag der Anmeldung:
**16.05.79 Patentblatt 79/10**

(84) Benannte Vertragsstaaten:
**CH DE FR GB NL SE**

(71) Anmelder: **PPS Polyvalent Patent Service AG**
**Fohrhölzlistrasse 17**
**CH-5443 Niederrohrdorf(CH)**

(72) Erfinder:
**Der Erfinder hat auf seine Nennung verzichtet**

(54) **Anlage und Verfahren zur kontinuierlichen Erzeugung von hochwertigem Generator- und Wassergas.**

(57) Anlage zur kontinuierlichen Erzeugung von hochwertigem weitgehend von Ballaststickstoff freien Generator- und Wassergas aus festen und hochsiedenden flüssigen Brennstoffen, welche aus einem in mehrere Kammern (27, 29, 31, 33) unterteilten, indirekt beheizten Reaktionsraum und einem die Wärmeenergie liefernden, an letzteren anschliessenden Heizungsraum sowie einer Anzahl von dem Wärmeaustausch dienenden, im Heizungsraum und im Rauchgaskanal (17) untergebrachten Apparaten wie Dampfkessel (41), Dampfüberhitzer (38, 44, 45), Teerverdampfer (51), Luftvorwärmer (14) für die Verbrennungsluft und Wärmeaustauscher (57, 61) für den Wärmetransport zwischen Heizungs- und Reaktionsraum mittels Umlaufgas besteht. Die Anlage weist ferner einen Wasserbehälter (39) und einen Terrbehälter(47) sowie eine Anzahl von Pumpen und Gebläsen (11, 19, 37, 40, 54, 59) auf. Durch Panzerung des aus Keramikmaterial bestehenden Reaktionsraumes kann die Anlage für Druckgaserzeugung ausgelegt sein.

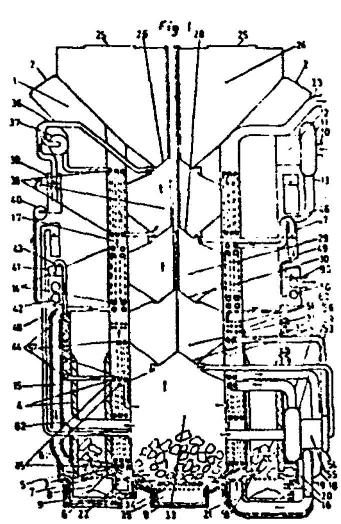


EP 0 001 857 A1

BEZEICHNUNG GEÄNDERT
siehe Titelseite

Anlage zur kontinuierlichen Erzeugung von hochwertigem Generator- und Wassergas

Anlagen zur Erzeugung von Generator- und Wassergas und entsprechende Arbeits- bzw. Herstellungsverfahren sind in zahllosen Varianten bekannt. Je nach Grösse und Ausführungsart stehen Anlagen im Betrieb, welche entweder mehr für industrielle oder mehr für mobile (Transport) Zwecke entwickelt worden sind. Unter den kontinuierlich arbeitenden industriellen Anlagen und Verfahren sind vor allem folgende zu nennen: Winkler, Koppers-Totzek, Bubiag-Didier, Lurgi-Druckgas (siehe Lueger, Lexikon der Technik, Stuttgart 1965, Band 7, Energietechnik und Kraftmaschinen, Vergasung fester Brennstoffe, S. 484-492). Bei mobilen Anlagen herrscht im allgemeinen der nach dem Sauggasverfahren betriebene Gaserzeuger vor, der vorwiegend mit Holz oder Holzkohle beschickt wird (siehe W. Thoelz, Kraftwagengaserzeuger für Holz und Holzkohle, Autotechnische Bibliothek, Band 98, Berlin 1942, 2. Auflage). Es sind Gaserzeugungsanlagen für aufsteigende wie für absteigende Vergasung für die verschiedensten Brennstoffe wie Holz, Torf, Braunkohle, Steinkohle, Anthrazit, Holzkohle, Braun- und Steinkohlenkoks entwickelt worden. Die kontinuierlich arbeitenden industriellen Anlagen arbeiten meistens unter Zuhilfenahme von technischem Sauerstoff und erzeugen ein stickstoffarmes Starkgas. Mobile Sauggasanlagen für Fahrzeuge werden in der Regel mit Luft betrieben und liefern ein stickstoffhaltiges Schwachgas geringeren Heizwertes. Anlagen zur Erzeugung von Generatorgas aus Holz und Holzkohle als Primärbrennstoff sind in zahlreichen Ausführungsformen bekannt (z.B. W. Heller, Neuzeitliche Holzgasanlagen für Kraftfahrzeuge, Automobiltechnische Zeitschrift 1940, S. 455-459; H. Finkbeiner, Holzgaserzeuger für Lastwagenantrieb, VDI-Zeitschrift 1940, S. 645-650; CH-PS No. 129236; CH-PS No. 246215).

Die bekannten, kontinuierlich arbeitenden ortsfesten Anlagen zur Erzeugung von Generator- und Wassergas bestehen meistens aus voluminösen komplizierten Apparaten beträchtlichen Gewichtes und benötigen in den meisten Fällen technischen Sauerstoff zu ihrem Betrieb. Sie sind daher als transportable und mobile Geräte insbesondere zum Fahrzeugantrieb ungeeignet. Andererseits liefern bekannte konventionelle Gaserzeuger für Fahrzeugmotoren lediglich ein Schwachgas mit verhältnismässig niedrigem Heizwert. Der dadurch bedingte, gegenüber dem Betrieb mit flüssigen Brennstoffen geringere Gemischheizwert ("Ladedichte") bewirkt einen unerwünschten Leistungsabfall des Motors und ein schlechtes Beschleunigungsverhalten des Fahrzeuges (siehe auch P. Schläpfer und J. Tobler, Theoretische und praktische Untersuchungen über den Betrieb von Motorfahrzeugen mit Holzgas, Bericht Nr. 3, Schweizerische Gesellschaft für das Studium der Motorbrennstoffe, Bern 1937). Es besteht daher das Bedürfnis nach einem Gerät, welches den betrieblichen Bedingungen besser gerecht wird und ein hochwertiges Gas gleichbleibender Qualität liefert.

Der der Erfindung zugrunde liegende massgebende Leitgedanke besteht in einer Aufgabentrennung zwischen dem die Wärmebilanz deckenden reinen Heizstoff und dem eigentlichen, zu entgasenden und zu vergasenden Reaktionsstoff. Durch diese Arbeitsteilung werden die Prozesse übersichtlich und lassen sich in ihren Einzelheiten besser beherrschen und steuern. Diese Methode ermöglicht somit eine optimale Lösung der Einzelaufgaben.

Eine besonders vorteilhafte Anordnung besteht in der Verwendung von isolierten, gepanzerten keramischen Hochtemperaturbaustoffen, welche die Anwendung hoher Temperaturen und höherer Drücke ermöglichen. Dadurch ist die Anlage imstande, unmittelbar ein hochwertiges Gas unter Druck anzuliefern.

Die dadurch geschaffene Anpassungsfähigkeit gestattet, die meisten festen Brennstoffe weitgehend unabhängig von ihrem Wasser- und Aschengehalt in wirtschaftlicher Weise in ein hochwertiges Arbeitsgas überzuführen, was mit konventionellen Anlagen nicht ohne weiteres der Fall ist. Es werden hiezu keine voluminösen Wärmespeicher noch komplizierte Umstellmechanismen benötigt und es kann auf eine permanente Sauerstoffquelle in den meisten praktischen Fällen verzichtet werden. Trotzdem arbeitet die Anlage in kontinuierlichem Betrieb und liefert ein praktisch stickstoffreies Starkgas.

Durch die weitgehende Freiheit in der Wahl der Betriebsgrössen Temperatur und Druck sind auch chemische Reaktionen durchführbar, so dass die Gaszusammensetzung in einem gewissen Mass den Bedürfnissen angepasst werden kann. Dies ist insbesondere von Bedeutung, wenn das primär erzeugte Gas nicht direkt zu wärmetechnischen oder motorischen Zwecken, sondern als Ausgangsmaterial zur chemischen Weiterverarbeitung verwendet werden soll.

Weitere Einzelheiten der Erfindung ergeben sich aus den nachstehend zum Teil durch Figuren näher erläuterten Ausführungsbeispielen.

Dabei zeigt:

Fig 1 einen schematischen Längsschnitt durch eine Gaserzeugungsanlage,

Fig 2 einen schematischen Längsschnitt durch die unteren beiden Kammern des Reaktionsraumes eines Gaserzeugers,

Fig. 3 ein schematisches Fliessbild der Reaktionszonen und Stoffkreisläufe einer Gaserzeugungsanlage.

In Fig. 1 ist ein schematischer Längsschnitt, welcher den prinzipiellen konstruktiven Aufbau der Gaserzeugungsanlage zeigt, dargestellt. Den Gaserzeuger hat man sich im allgemeinen als rotationssymmetrischen, vorwiegend Bauelemente kreisförmigen Querschnittes aufweisenden Körper vorzustellen. In Sonderfällen sind jedoch auch quadratische, rechteckige oder beliebig andere Querschnittsformen für die die Hauptabmessungen bestimmenden Elemente ausführbar. Dies gilt insbesondere für den zentralen schachtförmigen Teil.

Grundsätzlich besteht die Anlage aus einem zentral angeordneten schachtförmigen Reaktionsraum, der von einem mantelförmigen Heizungsraum und den zusätzlichen Hilfsaggregaten umschlossen ist. Der mit Deckeln 2 versehene Vorratsbehälter 1 nimmt den als Heizstoff dienenden Brennstoffanteil auf. Dieser, einen ringförmigen Querschnitt aufweisende Vorratsbehälter 1 geht in seinem unteren Teil in den Herd 3 des Heizungsraumes über, welcher allseitig mit einer Herdauskleidung 4 versehen ist. der Herd 3 besitzt Eintrittsdüsen 5 für die Verbrennungsluft und Austrittsdüsen 6 für die Rauchgase. Die Achsen von 5 und 6 können radial oder in vorteilhafter Weise tangential an einen dem Herd einbeschriebenen Kreis angeordnet sein. Nach unten wird der Heizungsraum durch einen kreisringförmigen Rost 7 und einen Aschebehälter 8 abgeschlossen. Der ganze untere Teil des Gaserzeugers ist durch die Wärmeisolation 9 nach aussen hin abgeschlossen. Die kalte Verbrennungsluft für den Heizstoff gelangt über den Lufteintrittstutzen 10 und das mit dem Antriebsmotor 12 versehene Gebläse 11 in die Luftleitung 13 und den vom Rauchgas beheizten Luftvorwärmer 14. Die vorgewärmte Verbrennungsluft wird über die isolierte Luftleitung 15 und die Ringleitung 16 dem Herd 3 zugeführt. Zur Führung des heissen Rauchgases ist ein Rauchgaskanal 17 mit ringförmigem Querschnitt vorgesehen, in welchem alle zur Durchführung des

Entgasungs- und Vergasungsprozesses sowie zur Vorwärmung und Ueberhitzung notwendigen Apparate untergebracht sind. Zur Temperaturstabilisierung und zwecks Erhöhung der verfügbaren Menge des Wärmeträgers im untersten Teil des Rauchgaskanals 17 wird ein Teil des Rauchgases über die Abzugsleitung 18 und das mit einem Antriebsmotor 20 versehene Gebläse 19 abgezogen und als Umlauf-Rauchgas über die Zuleitung 21 und die Ringleitung 22 dem primären Rauchgas wieder zugeführt (geschlossener Kreislauf). Am oberen Ende des Rauchgaskanals 17 befindet sich der Rauchgasabzug 23.

Der als Reaktionsstoff dienende Anteil des Brennstoffes wird in den mit Deckeln 25 verschliessbaren Vorratsbehälter 24 abgefüllt und gelangt sukzessive in die den Reaktionsraum bildenden Kammern 27, 29, 31 und 33, welche durch Kammerverschlüsse 26, 28, 30 und 32 voneinander getrennt sind. Jede Kammer kann prinzipiell unter einem für ihre Funktionsweise optimalen separaten Druck gehalten werden. Nach Massgabe des Verbrauchs an Reaktionsstoff werden die Kammerverschlüsse nacheinander geöffnet, so dass weiteres Material in die darunterliegende Kammer nachrutschen kann. Dabei wird dafür gesorgt, dass gleichzeitig nur immer ein einziger Kammerverschluss betätigt wird. Um die Stellkräfte der Kammerverschlüsse klein zu halten, sind sie mit (hier nicht gezeichneten) Ventilen versehen, welche vor der Betätigung kurzzeitig geöffnet werden, um einen Druckausgleich zwischen den zu verbindenden Kammern zu bewerkstelligen. Werden zwei benachbarte Kammern dauernd unter annähernd dem selben Druck betrieben, können selbstverständlich diese Ausgleichsventile entfallen. Der Reaktionsstoff wird zunächst über den Kammerverschluss 26 in die Trockenkammer 27 eingeschleust, in welcher Temperaturen von ca. 0° C bis ca. 200° C herrschen. Die Kammer 27 kann unter Atmosphärendruck stehen, wird aber vorteilhafterweise bei Drücken von 1,5 bar

bis etwa 4 bar betrieben. Da bei der Entwässerung teilweise korrosive Produkte entstehen, wird die Kammer 27 in vorteilhafter Weise in korrosionsbeständigem Stahl (V2A) oder kupferplattiertem Stahlblech ausgeführt. In der nachfolgenden Tieftemperatur-Entgasungskammer 29, wo Temperaturen zwischen ca. 200° C und 350° herrschen, findet hauptsächlich der Destillationsvorgang statt, wobei der Brennstoff sukzessive verkohlt. Der Druck in Kammer 29 wird vorteilhafterweise bei ca. 2 bis 4 bar gehalten. Die anschliessende, durch den Kammerverschluss 30 abgetrennte Hochtemperatur-Entgasungskammer 31 kann unter dem selben Druck wie 29 oder unter 2 bis 10 bar stehen. Da die Temperaturen hier bereits 350° C bis 500° C, unter Umständen bis 750° C betragen können, muss diese Kammer aus warmfestem Werkstoff, der gleichzeitig auch gute Korrosionsbeständigkeit besitzt, bestehen. Dazu kommen vornehmlich höher legierte Ni/Cr-Stähle, Cr/Al-Stähle und Chromnickellegierungen in Frage. In der Kammer 31 findet auch teilweise der Aufheizprozess auf die nachfolgend für die Vergasung notwendigen Temperaturen statt. Ueber den letzten Kammerverschluss 32 gelangt der weitgehend entgaste Reaktionsstoff in die Vergasungskammer 33, wo er mittels Wasserdampf und/oder Sauerstoff vergast wird. Die Rückstände fallen durch den Rost 34 in den Aschebehälter 35. In der Vergasungskammer 33 und im anschliessenden Aschebehälter 35 herrscht in der Regel ein Druck von ca. 2 bar bis 10 bar, wobei die Temperatur in der Kammer von ca. 850° C nach unten bis auf ca. 1250° C ansteigt, um in der Nähe des Rostes 34 und im Aschebehälter 35 wieder abzufallen. Die Beheizung der Trockenkammer 27 kann auf verschiedene Arten erfolgen. Prinzipiell wird hiefür ein Wärmeträger in Gas- oder Dampfform benutzt. Zu diesem Zweck kann Warmluft, Rauchgas oder Heissdampf verwendet werden. Im Falle der Benutzung von Warmluft wird ein Teil der für den Heizungsraum benötigten vorgewärmten Verbrennungsluft abgezweigt und zur Trocknung des

Reaktionsstoffes verwendet. Die mit Wasserdampf gesättigte Warmluft kann nach Verlassen der Kammer 27 entweder ins Freie gelassen oder weiter als Zusatz zur Verbrennungsluft des Heizungsraumes verwendet werden. In jedem Fall sind das Gebläse 11 und der Antriebsmotor 12 für diese Verhältnisse stärker zu dimensionieren. Wird mit Rauchgas getrocknet, so genügt es, einen Teil desselben vor Austritt ins Freie zu benützen. Im vorliegenden Beispiel erfolgt die Trocknung mit Hilfe der als Dampf über die Abzugsleitung 36 entweichenden Feuchtigkeit selbst. Das Gebläse 37 fördert den Umlaufdampf in den Dampftrockner (Ueberhitzer) 38, von wo er in die Trockenkammer 27 zurückgelangt, um einen Teil seiner fühlbaren Wärme abzugeben und weitere Feuchtigkeit aufzunehmen. Der überschüssige Wasserdampf wird im Wasserbehälter (Kondensator) 39 niedergeschlagen. Letzterer kann je nach dem gewünschten Druck in der Trockenkammer 27 auf einem passenden Temperaturniveau gehalten werden. Je nach dem Feuchtigkeitsgehalt des als Reaktionsstoff verwendeten Brennstoffes kann der Wasserbehälter 39 zusätzlich oder ausschliesslich mit Fremdwasser betrieben werden. Es versteht sich von selbst, dass beim Betrieb des Gerätes mit bereits entgasten Brennstoffen geringer Feuchtigkeit (Holzkohle, Koks) die gesamte Trocknungsapparatur und die zugehörige Kammer 27 entfallen kann. Dasselbe gilt naturgemäss für die Kammern 29 und 31. In diesem Fall kann die Beheizung des Reaktionsstoffes in ähnlicher Weise wie in Kammer 33 mittels zusätzlichem Umlaufgas-Kreislauf erfolgen (siehe unten). Das Wasser des Behälters 39 gelangt über die Speisepumpe 40 in den Dampfkessel 41, welcher über eine vom erzeugten heissen Arbeitsgas durchströmte Heizschlange 42 beheizt wird. Der Druck des Kessels 41 muss mindestens etwas höher gewählt werden als derjenige in der Vergasungskammer 33. Der erzeugte Dampf gelangt über das Dampfventil 43 in den ersten Dampfüberhitzer 44, welcher seinerseits vom heissen Arbeitsgas beheizt wird. Anschliessend strömt der Dampf über den zweiten, vom Rauchgas

beheizten Dampfüberhitzer 45 durch entsprechende Düsen mit hoher Geschwindigkeit und einer Temperatur von ca. 1250° C in die Vergasungskammer 33. Von der Tieftemperatur-Entgasungskammer 29 führt die Abzugsleitung 46 für Teer und flüchtige Bestandteile in den Teerbehälter 47, wo sich vornehmlich Teer aber auch andere leicht kondensierbare Bestandteile der Trockendestillation abscheiden. Der Teerbehälter 47 kann auch zusätzlich oder ausschliesslich mit Fremdteer, Asphalt, Pech und dergleichen beschickt werden. Ueber das Teerventil 49 und die Teerleitung 50 gelangt der Teer in den Teerverdampfer und -Ueberhitzer 51, der vom Rauchgas beheizt wird. Der Teerdampf wird nach Massgabe seines Anfalls kontinuierlich oder diskontinuierlich über die Teerdampfleitung 52 in die Vergasungskammer 33 eingespritzt. Die Beheizung der letzteren erfolgt indirekt mittels zweier Systeme von Umlaufgas. Im oberen kälteren Teil der Kammer 33 zweigt die Abzugsleitung 53 für das Umlaufgas I ab, welches mit Hilfe des Gebläses 54 über die Zuleitung 56 und den Wärmeaustauscher 57 umgewälzt wird. Im mittleren, auf ca. 850° C stehenden Teil der Kammer wird das Umlaufgas II über die Abzugsleitung 58, das Gebläse 59, die Zuleitung 60 und den Wärmeaustauscher 61 umgewälzt. Die Gebläse 54 und 59 werden vom gemeinsamen Motor 55 angetrieben. Die beiden Wärmeaustauscher 57 und 61 werden vom Rauchgas derart beheizt, dass das Umlaufgas I mit mindestens 750° C, das Umlaufgas II mit ca. 1250° C in die Vergasungskammer 33 eintritt. Das Arbeitsgas verlässt die letztere mit einer Temperatur von ca. 750° C bis 850° C über die Abzugsleitung 62 und wird der Anlage am Gasaustrittstutzen 90 entnommen. Die Vergasungskammer 33 sowie der Wärmeaustauscher 61 bestehen aus Hochtemperaturwerkstoff, um den hohen thermischen und mechanischen Beanspruchungen standhalten zu können. Ausserdem muss der Werkstoff zunderbeständig sein, um nicht von den oxydierenden Rauchgasen angegriffen zu werden. Es kommen hier daher nur hochprozentige Legierungen des Typs Cr/Ni oder Cr/Al mit allfälligen

weiteren Zusätzen von Si, W, Mo, V, Ti etc. in Frage. Um eine besonders hohe Lebensdauer zu erzielen, kann für die genannten Bauteile auch ein Verbundwerkstoff verwendet werden, welcher höchste Warmfestigkeit auf der einen Seite mit bester Zunderbeständigkeit auf der andern Seite kombiniert. Die zunderbeständige Schicht kann durch Plattieren, Alitieren etc. auf den warmfesten Grundwerkstoff aufgebracht werden.

Als Antriebsmaschinen 12, 20, 55 für die Gebläse 11, 19, 54 und 59 sowie für das Gebläse 37, die Speisepumpe 40 und eine allfällig notwendige Teerpumpe (in dieser Figur nicht gezeichnet) können Elektromotoren, Abgasturbinen, Dampfturbinen, Entspannungs-Gasturbinen oder Hilfs-Gasturbinen dienen. Die Wahl des Maschinentyps hängt vom Verwendungszweck und Aufstellungsort der Anlage ab. Bei stationären Anlagen wird man bevorzugt elektrisch antreiben, während für das fahrbare, als Gaserzeuger für eine Verbrennungskraftmaschine dienende Gerät die Abgasturbine oder eine entsprechende Druckwellenmaschine zumindest für die höheren Antriebsleistungen in den Vordergrund rückt.

Die Detailausführung der Anlage hängt von Fall zu Fall vom zu vergasenden Reaktionsstoff ab. Das Gerät eignet sich vorzugsweise für Holz, Torf und Braunkohle, also für Brennstoffe, welche einen hohen Gehalt an Feuchtigkeit, gebundenem Wasser und flüchtigen Bestandteilen aufweisen. Wird der Gaserzeuger dagegen mit Anthrazit, Holzkohle oder Koks betrieben, so kann mindestens die Trockenkammer 27, gegebenenfalls auch die Kammer 29 entfallen oder mit Kammer 31 zusammengelegt werden.

Fig. 2 zeigt einen Längsschnitt durch eine andere Ausführungsart eines Gaserzeugers im Bereich der beiden unteren Kammern des Reaktionsraumes. Die Vergasungskammer 33 weist eine aus keramischem Material bestehende feuerfeste Auskleidung 77 auf, welche nur auf Druck beansprucht ist. Die durch den Innendruck von bis

10 bar am Umfang des zylindrischen Körpers erzeugten Zugspannungen werden durch den mantelförmigen metallischen Druckpanzer 78 aufgenommen. Letzterer kann je nach Temperaturgefälle in der Auskleidung 77 aus gewöhnlichem oder bei Temperaturen von 400° C bis 800° C warmfestem Stahl bestehen. Wählt man für die Auskleidung 77 hochfeuerfestes Material wie Quarz, Magnesia oder Tonerde, so kann die Vergasungskammer 33 bei höheren Temperaturen, beispielsweise bei 1500° C und darüber betrieben werden (Hochtemperaturvergasung). Damit erweitert sich das Anwendungsgebiet der Anlage auf chemische Prozesse, welche hohe Temperaturen und höhere Drücke benötigen. Das Umlaufgas 74 wird der Kammer 33 über die Abzugsleitung 58 entnommen und mittels Gebläse 59 über die Zuleitung 60 in den Wärmeaustauscher II gedrückt. Die Leitungen 58 und 60 weisen eine keramische Auskleidung, eine wärmeisolierende Schicht und einen äusseren Blechmantel auf, welcher die mechanischen Kräfte aufnimmt. Auch das Gebläse 59 wird in vorteilhafter Weise wärmeisoliert ausgeführt. Das Rauchgas 68, welches Temperaturen von 2000° C und mehr aufweisen kann, strömt über die Austrittsdüsen 6 des Herdes in eine Ringleitung 79, welche die vertikalachsig auf einem Kreisumfang angeordneten rohrförmigen Bauelemente des Wärmeaustauschers II verbindet. Je nach der zu übertragenden Wärmeleistung können 6, 8, 12 oder 16 derartige Elemente, in orgelpfeifenartiger Anordnung rund um die Kammer 33 gruppiert, vorhanden sein. Die Elemente bestehen je aus einem einen zylindrischen Rauchgaskanal 81 aufweisenden hochfeuerfesten Keramikrohr 80, dessen Wandung eine verhältnismässig grosse Zahl (beispielsweise 12 bis 24) achsparallele Umlaufgaskanäle 82 enthält. Als Material für 80 kommen Siliziumkarbid, Kohlenstoff, Sintermagnesit, Dolomit und Mischungen dieser Werkstoffe in Frage. Das Keramikrohr 80 ist von einem Isolierrohr 83 umgeben, welches seinerseits von einem rohrförmigen metallischen Druckpanzer 84 zusammengehalten wird. Der Zwischenraum zwischen den den Wärmeaustauscher II konstituierenden zylindrischen Bauelementen, dem Druckpanzer 78 und der

inneren Wand des umgebenden Heizungsraumes dient als Luftkanal 85 zur Vorwärmung der Verbrennungsluft. Entgegen Fig. 1 ist in dieser Ausführung der Umlaufgas I-Kreislauf in die Kammer 31 verlegt, welche in diesem Fall vornehmlich zur Aufheizung des Reaktionsstoffes dient. Das Umlaufgas 73 wird über die Ringleitung 87 und die Abzugsleitung 53 der Kammer 31 am oberen Ende entnommen, in den Wärmeaustauscher 57 gefördert und über die Zuführungsleitung 88 und die Eintrittsöffnungen 89 der Kammer unten wieder zugeführt. Für diesen Kreislauf und seine in konventionellen metallischen Werkstoffen ausgeführten Bauelemente gilt das unter Fig. 1 Gesagte. Alle hier nicht näher erläuterten Bezugszeichen entsprechen denjenigen in Fig. 1.

In Fig. 3 sind die Reaktionszonen sowie die einzelnen Stoffkreisläufe der Gaserzeugungsanlage dargestellt, womit der Verfahrensablauf näher erläutert wird. Das Diagramm ist schematisch in den Heizungsraum 63, in welchem sich verschiedene Wärmeaustauscher befinden, und in den Reaktionsraum 64, in welchem sich die chemischen Prozesse abwickeln, aufgeteilt. Letzterer zerfällt wieder in die Kammern 27, 29, 31 und 33, die durch die Kammerverschlüsse 26, 28, 30 und 32 jeweils voneinander getrennt sind. Alle anderen Apparate und Maschinen befinden sich ausserhalb dieser vorgenannten Räume. Dem Ofenraum 63 wird der Heizstoff 65 zugeführt und mittels der Verbrennungsluft 67 (symbolisiert durch "$O_2$ $4N_2$") verbrannt. Letztere wird vom Gebläse 11 angesaugt und in den vom Rauchgas 68 beheizten Luftvorwärmer 14 gedrückt. Der zu entgasende und zu vergasende Reaktionsstoff 66 gelangt zuerst über den Kammerverschluss 26 in die Trockenkammer 27. In letzterer herrschen Temperaturen von ca. $0^{o}$ C bis ca. $200^{o}$ C, so dass der Reaktionsstoff vollständig getrocknet und - im Falle von Holz - teilweise seines gebundenen Wassers beraubt wird. Die zur Wasseraustreibung benötigte Wärmemenge wird - nach einem kurzen Anlaufprozess, bei welchem die vorhandene Luft in der Kammer 27 herangezogen wird - vom als

Wärmeträger dienenden Wasserdampf 69 (symbolisiert durch "$H_2O$") selbst geliefert. Zu diesem Zweck wird letzterer als Umlaufdampf vom Gebläse 37 in den Dampftrockner 38, welcher zur Ueberhitzung dient, gefördert und der Kammer 27 mit einer Temperatur von ca. 200° C bis 250° C wieder zugeleitet. Ein Teil des die Trockenkammer 27 verlassenden gesättigten bzw. nassen Dampfes gelangt in den als Kondensator wirkenden Wasserbehälter 39, wo er laufend abgeschieden wird. Letzterer wird durch die Aussenluft gekühlt und vorteilhafterweise auf einem Temperaturniveau gehalten, welches unter Berücksichtigung des Wasserdampf-Partialdruckes auch einen Betrieb der Kammer 27 unter höherem als Atmosphärendruck gestattet. Gegebenenfalls kann in die Dampfzuleitung zum Behälter 39 zusätzlich ein intermittierend zu betätigendes Ventil eingebaut werden (nicht gezeichnet in Fig. 3). Je nach Feuchtigkeitsgehalt des Reaktionsstoffes 66 kann bzw. muss in den Behälter 39 zusätzlich Fremdwasser eingefüllt werden. Dies gilt vor allem dann, wenn das Gerät mit Holzkohle, Koks oder Anthrazit als Reaktionsstoff 66 beschickt wird. In diesem Fall kann die ganze Trocknungsapparatur inkl. Kammer 27 entfallen. Das Wasser des Behälters 39 wird periodisch mittels einer hier nicht gezeichneten Speisepumpe in den Dampfkessel 41 gefördert, dessen Druck höher als der Arbeitsdruck in der Vergasungskammer 33 sein muss. Ueber ein nicht gezeichnetes Dampfventil gelangt der Dampf in einen ersten, vom Arbeitsgas 75 beheizten Ueberhitzer 44 und von hier in einen zweiten, vom Rauchgas 68 beheizten Ueberhitzer 45. Der auf 1200° C bis 1300° C überhitzte Dampf 69 wird schliesslich mit hoher Geschwindigkeit auf die Beschickung im unteren Teil der Kammer 33 geblasen. Der getrocknete und zum Teil entwässerte Reaktionsstoff 66 wird periodisch über den Kammerverschluss 28 in die Tieftemperatur-Entgasungskammer 29 geschleust. Hier setzt die erste Phase der Trockendestillation ein, welche sich bei Temperaturen bis zu ca. 350° C vollzieht. Das entstehende Destillationsgas 70

(symbolisiert durch "$CO_2$, CO, $CH_4$, H2, Cn Hm, CH3 COOH"), welches neben den nicht kondensierbaren Bestandteilen Kohlendioxyd, Kohlenmonoxyd, Methan und Wasserstoff hauptsächlich schwere Kohlenwasserstoffe, Teere und Essigsäure enthält, wird in den als Kondensator arbeitenden Teerbehälter 47 geleitet, wo sich die verflüssigbaren Bestandteile abscheiden. Die gasförmigen, nicht kondensierbaren Bestandteile 72 des Destillationsgases werden unmittelbar dem Umlaufgas 74 am Eintritt des Gebläses 59 beigemischt. Der Teer 71 gelangt über ein Teerventil und eine Fördereinrichtung (hier nicht gezeichnet) in den Teerverdampfer und -Ueberhitzer 51, welcher vorteilhafterweise zweiteilig (Tieftemperatur- und Hochtemperaturteil) ausgeführt ist und vom Rauchgas 68 beheizt wird. Der dabei entstehende Teerdampf wird in den heissesten Teil der Glutzone der Kammer 33 eingespritzt, wo er vollständig zersetzt wird. Die Kammer 29 wird vorzugsweise bei Drücken von 2 bis 4 bar betrieben. Unter gewissen Bedingungen ist es vorteilhaft, den Druck so hoch zu wählen, dass noch ein gewisses Druckgefälle gegenüber Kammer 33 vorhanden ist, so dass sich zusätzliche Pumpen erübrigen. Der vorentgaste Reaktionsstoff gelangt periodisch über den Kammerverschluss 30 in die Hochtemperatur-Entgasungskammer 31, wo er auf Temperaturen von bis ca. 500° C erhitzt wird. Die noch entweichenden Gase werden nach Massgabe des Druckanstiegs periodisch über den Kammerverschluss 32 in die Kammer 33 abgelassen, wo sie sich mit dem Umlaufgas 73 mischen. Eine andere Möglichkeit besteht darin, die Destillationsgase während der jeweiligen Einschleuseperiode des Reaktionsstoffes beim Oeffnungsvorgang des Kammerverschlusses 30 dem Gas 70 beizumischen. Verlangt der Reaktionsstoff ein rasches Durchlaufen des Temperaturintervalls von 200° C bis 350° C, so kann selbstredend das Destillationsgas 70 auch in der Kammer 31 angezapft werden. Desgleichen kann der Kreislauf des Umlaufgases I auch in die Kammer 31 verlegt werden. Dies ist besonders dann angezeigt, wenn der Reaktionsstoff vorteilhafterweise bei hohen Temperaturen (500° C bis 700° C) zu entgasen ist. Das Gerät ist jedenfalls so ausgelegt, dass alle Betriebsmöglichkeiten ausführbar sind. Im vorliegenden Beispiel gelangt der entgaste Reaktionsstoff über den Kammerverschluss 32 in den oberen Teil der Vergasungskammer 33, wo er durch das Umlaufgas 73 auf Temperaturen von 700° C bis 800° C gebracht wird. Letzteres wird durch das Gebläse 54 umgewälzt und im vom Rauchgas 68 beheizten Wärmeaustauscher 57 erwärmt. Im unteren Teil der Kammer 33 ist ein weiterer Kreislauf mittels des Umlaufgases 74 (symbolisiert durch "CO, H2") vorgesehen, dessen Hauptaufgabe darin besteht, den für die endotherme Wassergasreaktion nötigen Wärmebedarf zu decken:

$$H_2O + C \longrightarrow CO + H_2$$

Das Umlaufgas 74 wird durch das Gebläse 59 gefördert, im Wärmeaustauscher 61 auf Temperaturen bis zu 1250° C gebracht und der Kammer 33 unmittelbar über dem Rost 34 zugeführt, wo es aufsteigend seine fühlbare Wärme im Gegenstrom bis auf eine Temperatur von ca. 850° C herunter an die abwärts gleitende Beschikkung abgibt. Das erzeugte Arbeitsgas 75 (symbolisiert durch "CO, H2") wird in einer Temperaturzone zwischen 750° C und 850° C entnommen und im ersten Dampfüberhitzer 44 sowie in der anschliessenden Heizschlange 42 des Dampfkessels 41 auf eine Temperatur von ca. 200° C bis 300° C heruntergekühlt. Die Kammer 33 wird in vorteilhafter Weise bei Drücken von 2 bis 10 ata betrieben. Die höheren Drücke gelten vor allem für Ausführungsformen der Kammer 33 mit feuerfester Auskleidung gemäss Fig. 2. In diesem Fall kann auch die maximale Kammertemperatur auf 1500° C bis 1600° C erhöht werden, wodurch sich Vorteile in konstruktiver und chemisch-thermodynamischer Hinsicht ergeben. Dank des höheren zur Verfügung stehenden Temperaturgefälles kann der Wärmeaustauscher 61 kleiner dimensioniert werden. Ausserdem sind in der Kammer 33 dank höheren Temperaturen

insbesondere unter gleichzeitig angewandten höheren Drücken Verschiebungen der chemisch-thermodynamischen Gleichgewichte erzielbar, die sich günstig auf die Gaszusammensetzung (beispielsweise Methangehalt) auswirken. Zur raschen Inbetriebsetzung und zur Ueberbrückung von Perioden erhöhter Gasentnahme (Ueberlast), kann in die Kammer 33 zusätzlich nach freier Wahl Sauerstoff 76 (symbolisiert durch "$O_2$") eingeblasen werden.

Durch die erfindungsgemässe Anlage zur Erzeugung von hochwertigem Generator- und Wassergas wurde ein Apparat geschaffen, welcher die kontinuierliche sukzessive Entgasung und Vergasung von festen, hochsiedenden flüssigen und bei Raumtemperatur festen, jedoch leicht schmelzbaren Brennstoffen ermöglicht. Der Apparat ist kompakt und gedrungen aufgebaut, vermeidet voluminöse und komplizierte Aggregate, ist transportabel und daher für ortsfesten wie mobilen Betrieb gleicherweise geeignet. Dies gilt vor allem für die Speisung von Verbrennungskraftmaschinen in Fahrzeugen und kleinen lokalen Verbrauchern. Dank seiner Anpassungsfähigkeit vermeidet das Gerät die bei der Umstellung von flüssigen auf feste Brennstoffe bekannten Nachteile des üblichen Sauggasbetriebes. Mit dem Gerät können wahlweise verschiedene Brennstoffe und Brennstoffgemische verwertet werden, wobei eine grosse Freizügigkeit der Betriebsweise gewährleistet ist.

Das erfindungsgemässe Verfahren gestattet die Vergasung von Brennstoffen praktisch beliebigen Feuchtigkeitsgehaltes und setzt auch dem Aschegehalt weitere Grenzen als herkömmliche Methoden. Temperatur und Druck sind ebenfalls sehr weite Grenzen gesteckt, so dass die Gaszusammensetzung insbesondere unter Zuhilfenahme von flüssigen Brennstoffen (Kracken) in hohem Masse dem Verwendungszweck angepasst werden kann.

## Patentansprüche:

1. Anlage zur kontinuierlichen Erzeugung von hochwertigem Generator- und Wassergas aus festen und hochsiedenden flüssigen Brennstoffen, dadurch gekennzeichnet, dass als Hauptarbeitsgerät im wesentlichen ein Heizungsraum (63) zur Wärmeerzeugung und ein in mehrere Kammern (27, 29, 31, 33) unterteilter Reaktionsraum (64) zur Durchführung des Trocknungs-, Entgasungs- und Vergasungsprozesses vorgesehen ist, dass ferner ein vom heissen Rauchgas (68) des Heizungsraumes (63) und/oder vom zu erzeugenden heissen Arbeitsgas (75) geheizter Dampfkessel (41) sowie ein Luftvorwärmer (14) für die Verbrennungsluft (67) und mindestens ein Wärmeaustauscher (57, 61) für den Wärmeübergang zwischen dem Heizungsraum (63) und dem Reaktionsraum (64) über einen als Umlaufgas (74) geführten Anteil des Arbeitsgases vorgesehen ist.

2. Anlage nach Anspruch 1, dadurch gekennzeichnet, dass der Heizungsraum (63) mehrteilig gegliedert ist und einen Herd (3) und einen Rauchgaskanal (17) aufweist, dass ferner der Reaktionsraum (64) in eine Trockenkammer (27), eine Tieftemperatur-Entgasungskammer (29), eine Hochtemperatur-Entgasungskammer (31) und eine Vergasungskammer (33) gegliedert ist und dass die Kammern (27, 29, 31, 33) durch von aussen betätigbare Kammerverschlüsse (26, 28, 30, 32) voneinander getrennt sind.

3. Anlage nach Anspruch 1, dadurch gekennzeichnet, dass der Reaktionsraum (64) als zentraler Schacht und der Heizungsraum (63) als mantelförmiger Ofen ausgebildet ist.

4. Anlage nach Anspruch 1, dadurch gekennzeichnet, dass der Heizungsraum (63) als innenliegender Schachtofen und der Reaktionsraum (64) als aussenliegender Mantel ausgebildet ist.

5. Anlage nach Anspruch 1, dadurch gekennzeichnet, dass der Wärmeaustauscher (61) mit einem Gebläse (59) für die Umwälzung des Arbeitsgases (75) versehen ist, welches von einem Elektromotor, einer Abgasturbine, einer Heissgas-Entspannungsturbine, einer

Hilfs-Gasturbine oder einer Hilfs-Dampfturbine angetrieben ist.

6. Anlage nach Anspruch 1, dadurch gekennzeichnet, dass zur Wasserabscheidung ein als Kondensator wirkender Wasserbehälter (39) und zur Teerabscheidung und/oder Aufnahme von hochsiedenden flüssigen oder zum Schmelzen von bei Raumtemperatur festen hochsiedenden Brennstoffen ein Teerbehälter (47) sowie mindestens ein Dampfüberhitzer (44, 45) und ein Teerverdampfer und -Überhitzer (51) vorgesehen ist.

7. Anlage nach Anspruch 1, dadurch gekennzeichnet, dass die Vergasungskammer (33) aus einer keramischen feuerfesten Auskleidung (77) und einem metallischen Druckpanzer (78) besteht und der Wärmeaustauscher aus mehreren je einen Rauchgaskanal (81) und mehrere Umlaufgaskanäle (82) aufweisenden parallel geschalteten hochfeuerfesten isolierten und gepanzerten Keramikrohren (80) aufgebaut ist.

8. Verfahren zum Betrieb einer Anlage nach Anspruch 1, dadurch gekennzeichnet, dass der kohlenstoffhaltige, als Reaktionsstoff (66) dienende, zur vergasende Brennstoff im Reaktionsraum (64) durch indirekte Beheizung vom Heizungsraum (63) aus getrocknet, entgast und auf die für die Wassergasreaktion notwendige Temperatur von mindestens 850$^{\circ}$ C gebracht wird und durch Einspritzen von Wasserdampf (69) in die Vergasungskammer (33) ein hochwertiges Arbeitsgas (75) erzeugt wird, wobei der zu vergasende Brennstoff in der Trockenkammer (27) bei Temperaturen bis zu 200$^{\circ}$ C durch Warmluft, Rauchgas oder umlaufenden Wasserdampf (69) getrocknet wird und der obere Teil der Vergasungskammer (33) und/oder die Hochtemperatur-Entgasungskammer (31) mittels in einem Wärmeaustauscher (57) umgewälzten Umlaufgas (73) aufgeheizt wird.

9. Verfahren nach Anspruch 8, dadurch gekennzeichnet, dass die in der Entgasungszone des Reaktionsraumes (64) gebildeten flüchtigen Substanzen (70, 71, 72) in die auf mindestens 850$^{\circ}$ C gebrachte Vergasungskammer (33) eingeblasen und zu hochwertigen niedrigsiedenden Kraftstoffen umgewandelt werden.

1019 PPS/Fk

10. Verfahren nach Anspruch 8, dadurch gekennzeichnet, dass zur Beschleunigung der Heizung des Reaktionsraumes (64) Sauerstoff oder ein Sauerstoff/Luft-Gemisch in den Reaktionsraum (64) und/oder den Heizungsraum (63) eingeblasen wird.

0001857

Fig. 1

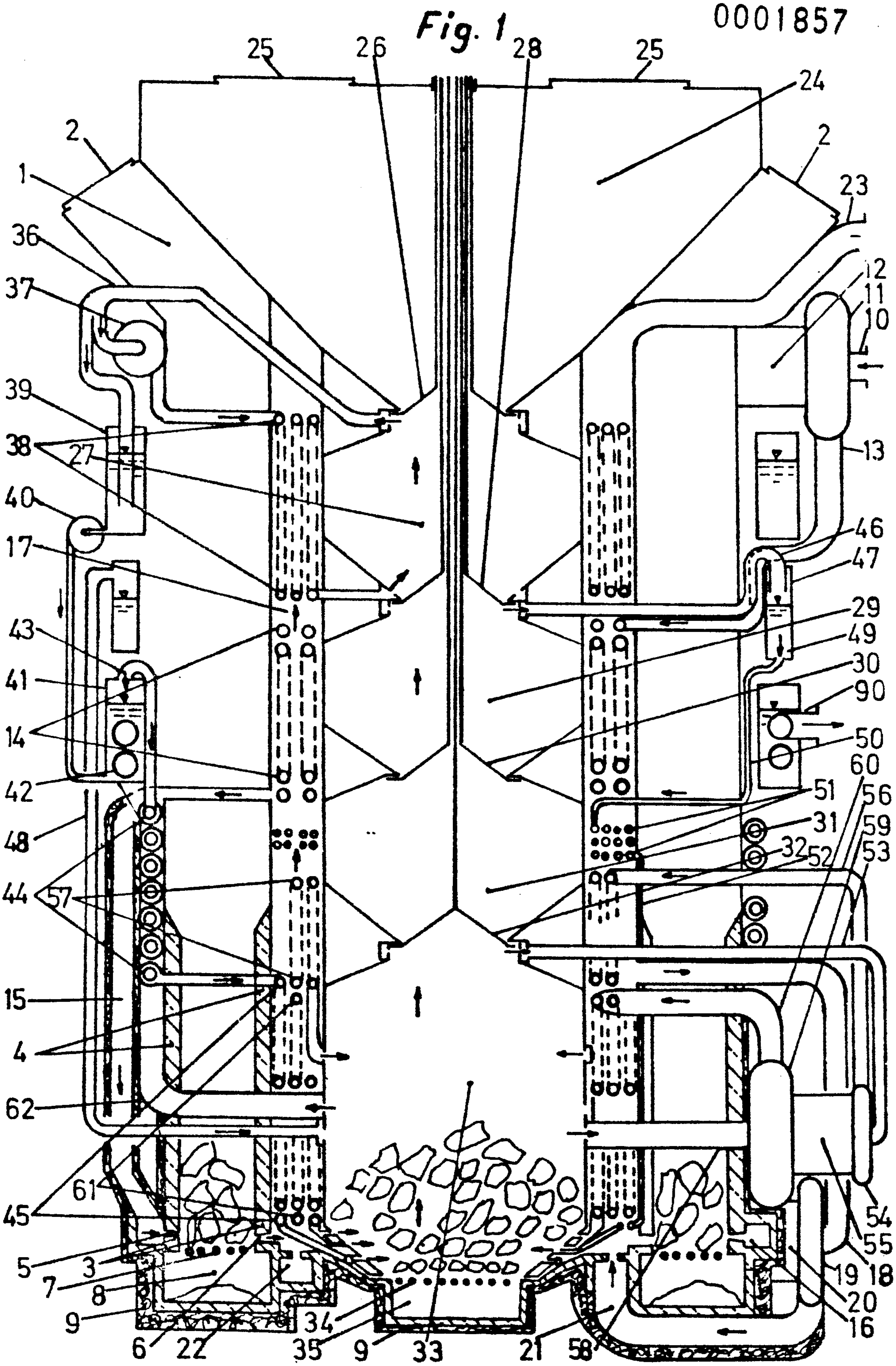

0001857

Fig. 2

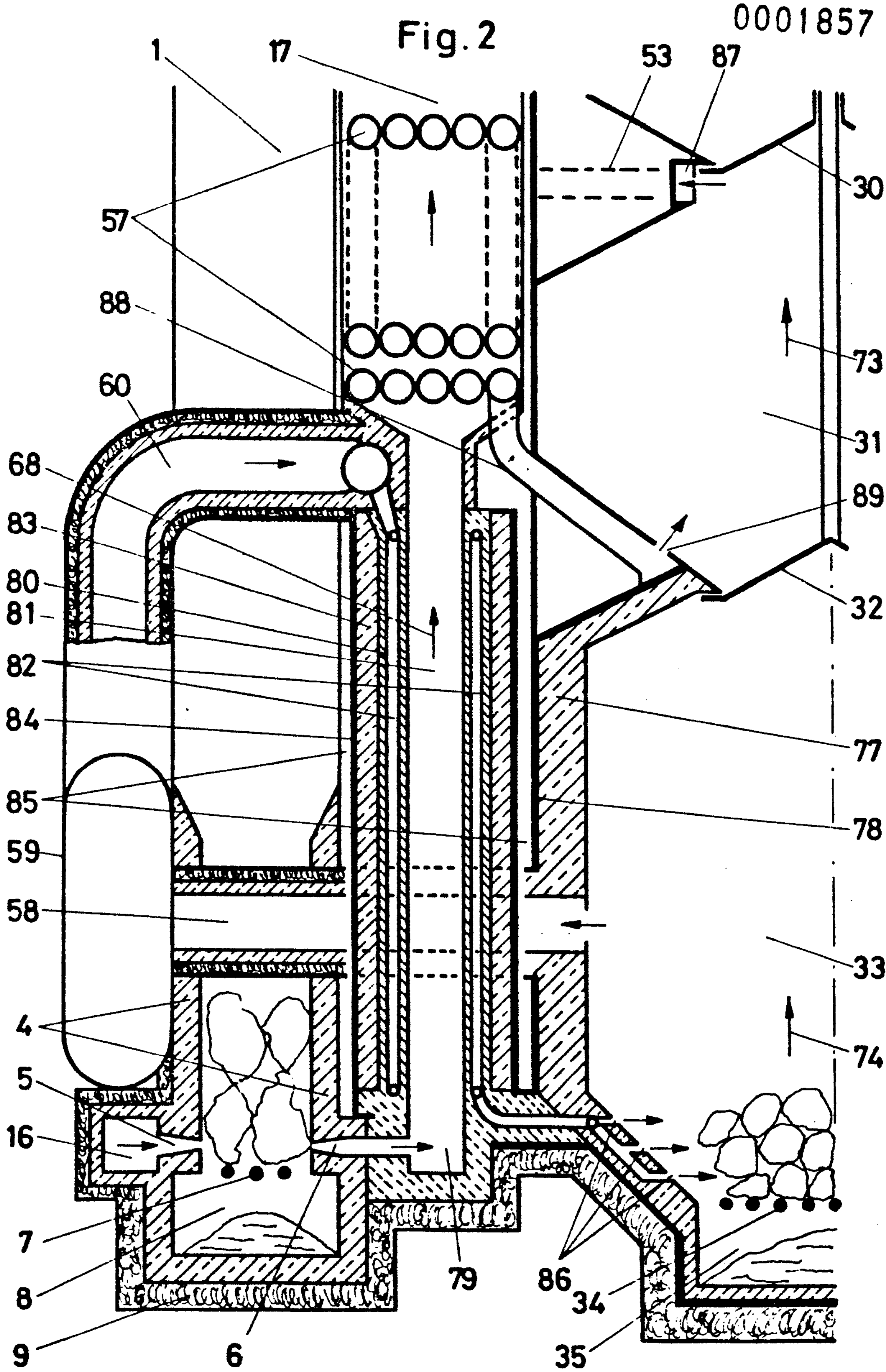

0001857

Fig. 3

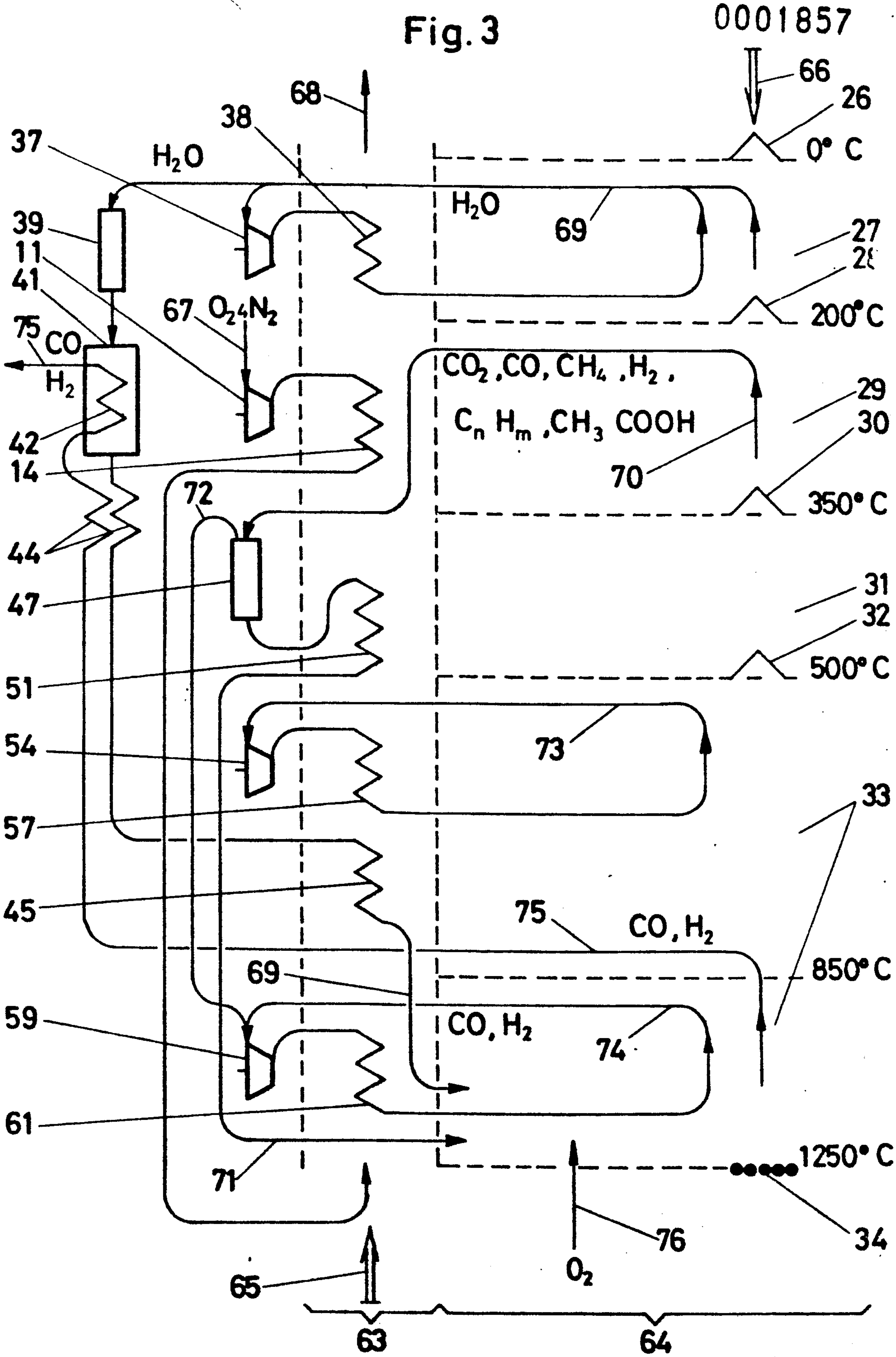

0001857

Europäisches Patentamt

**EUROPÄISCHER RECHERCHENBERICHT**

Nummer der Anmeldung

EP 78 20 0264

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - C - 422 999 (HILLEBRAND)<br>* Seite 1, Zeilen 25-40; Seite 2, Zeilen 1-122; Seite 3, Zeilen 1-114 *<br>-- | 1-3,5, 8,9 | C 10 J 3/06<br>3/20<br>3/66<br>C 01 B 2/00 |
| | DE - C - 713 209 (SCHNEIDER)<br>* Seite 2, Zeilen 83-122; Seite 3, Zeilen 1-48 *<br>-- | 1,3,4,8 | |
| | | | RECHERCHIERTE SACHGEBIETE (Int. Cl.²) |
| A | FR - A - 600 472 (ROUX) | | C 10 J 3/06<br>3/14<br>3/66<br>3/20<br>C 01 B 2/00 |
| A | FR - A - 823 858 (MAUTHNER) | | |
| A | FR - A - 911 458 (STANDARD FURNACE) | | |
| A | FR - E - 2 192 (BOUTILLIER)<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

☒ Der vorliegende Recherchenbericht wurde für alle Patentansprüche erstellt.

| Recherchenort | Abschlußdatum der Recherche | Prüfer |
|---|---|---|
| Den Haag | 23-01-1979 | WENDLING |